# EUROPÄISCHE PATENTSCHRIFT

(11) **EP 2 116 984 B1**
(45) Veröffentlichungstag und Bekanntmachung des Hinweises auf die Patenterteilung: **10.04.2019**
(21) Anmeldenummer: 08105821.6
(22) Anmeldetag: 19.11.2008
(51) Int. Cl.: G08G 1/09, G08G 1/0967, B60W 40/02, B60W 30/14, G06K 9/00, B60W 50/14, B60W 30/16, G08G 1/0962, B60W 50/00

(54) **Assistenzsystem zur Fahrerunterstützung in Fahrzeugen**
Assistance system for driver support in vehicles
Système d'assistance destiné au soutien du conducteur dans des véhicules

(30) Priorität: 09.05.2008 DE 102008001677
(43) Veröffentlichungstag der Anmeldung: 11.11.2009
(73) Patentinhaber: ROBERT BOSCH GMBH, 70442 Stuttgart (DE)
(72) Erfinder: Janssen, Holger, 31840, Hessisch Oldendorf (DE)

(56) Entgegenhaltungen:
- EP-A- 1 359 557
- EP-A- 1 519 339
- DE-A1-102004 012 136
- DE-A1-102004 040 208
- DE-A1-102006 019 714
- DE-A1-102006 023 544
- DE-A1-102007 010 013

## Beschreibung

Die Erfindung betrifft ein Assistenzsystem zur Fahrerunterstützung in Fahrzeugen nach dem Oberbegriff des Patentanspruches 1. Weiter betrifft die Erfindung ein Verfahren zur Fahrerunterstützung gemäß dem Oberbegriff des Anspruchs 11. Zudem betrifft die Erfindung ein Computerprogramm nach Anspruch 12 und ein Computerprogrammprodukt nach Anspruch 13.

### Stand der Technik

Die Erfindung geht aus von einem Assistenzsystem zur Fahrerunterstützung nach Gattung des unabhängigen Anspruchs. Weiter geht die Erfindung von einem Verfahren, einem Computerprogramm und einem Computerprogrammprodukt nach Gattung der unabhängigen Ansprüche aus.

Aus der DE 102 38 215 A1 sind eine Vorrichtung und ein Verfahren zur Fahrerinformation zur Reaktion bei Verlassen der Fahrspur bekannt, wobei die Fahrerinformation und/oder als Reaktion ein Fahrzeugeingriff erfolgt, wenn das Fahrzeug die Fahrspur zu verlassen droht, wobei wenigstens eine Begrenzung der Fahrspur erfasst wird. Allgemein bestehen Fahrerassistenzsysteme üblicherweise aus einer Funktion, die den Fahrer beim Durchführen seiner Fahraufgabe unterstützt und einer geeigneten Sensorik - beispielsweise einem Videosensor - inklusive eines Messverfahrens, das der Funktion die nötigen Informationen über das Fahrzeugumfeld liefert - beispielsweise der errechnete Abstand zum Fahrbahnrand auf das der Abstand des eigenen Fahrzeugs automatisch eingestellt und gehalten werden soll (Lanekeeping). Im Stand der Technik werden dazu Sensoren und deren Messprogramme so entwickelt, dass sie in sehr vielen Ländern zum Einsatz kommen können, wobei insbesondere häufig Videofunktionen weltweit zum Einsatz kommen sollen. Aufgrund der Vielzahl an unterschiedlichen Regelungen, Verordnungen, Vorschriften und länderspezifischen Details werden die Funktionen und die Messprogramme für Fahrerassistenzsysteme immer komplexer. Die Fahrerassistenzsysteme worden wegen der steigenden Komplexität entsprechend aufwendig und teuer, da die notwendige Rechenleistung beziehungsweise der erforderliche Entwicklungsaufwand für eine entsprechende Regelung steigt. Die Komplexität steigt dabei proportional mit der Anzahl der Ländervarianten an, welche das System unterstützen muss.

Aus der DE 10 2004 040 208 A1 ist ein Verfahren bekannt, bei dem zum Betreiben eines Fahrsystems eines Kraftfahrzeugs festgestellt wird, ob sich das Fahrzeug in einem von mehreren als Flächen vordefinierten Ortsbereichen befindet, und es wird ein Betriebsparameter oder Betriebsparametersatz des Fahrsystems in Abhängigkeit des Ortsbereiches, in dem sich das Fahrzeug momentan befindet, gesetzt, um eine Anpassung der Betriebsparameter des Fahrzeugsystems an den Betriebsort des Fahrzeugs vorzunehmen. Ein autonomes Erkennen von gebietsspezifischen, verkehrsleitungsrelevanten Charakteristika sowie ein Erkennen von Grenzüberschreitungen findet hier nicht statt.

Aus der EP1 519 339 B1 ist ein Fahrzeugsnavigationssystem bekannt, welches automatisch verkehrsleitungsrelevante Charakteristika in eine vom einem Nutzer zu bestimmende Sprache übersetzt. Hierbei werden die verkehrsleitungsrelevanten Charakteristika eines einzigen Gebietes erkannt und interpretiert, da heißt übersetzt. Anhand der Erkennung der verkehrsleitungsrelevanten Charakteristika findet keine Gebietsbestimmung statt. Zudem müssen sämtliche Daten für die Erkennung berücksichtigt werden. Eine Zuordnung von Datensätzen zu bestimmten Gebieten findet nicht statt, sodass eine hohe Rechenleistung erforderlich ist.

In der DE 10 2006 023 544 A1 ist ein Verfahren und eine Vorrichtung zum Betrieb eines Kraftfahrzeugs mit einer Unterstützungsfunktion offenbart, bei der mittels einer digitalen Kamera die Fahrumgebung bezüglich Verkehrszeichen und anderer Merkmale analysiert und den erkannten Merkmalen je nach ihrer Häufigkeit und Konstellation eine wahrscheinlichste Umgebungsklasse zugeordnet wird. Um den Fahrkomfort und die Fahrsicherheit zu erhöhen, wird bei der jeweils vorliegenden Umgebungsklasse eine bestimmte optimierte Betriebsart von Unterstützungsfunktionen für der Fahrer eingestellt.

### Offenbarung der Erfindung

Im Lichte des Standes der Technik stellte die vorliegende Erfindung ein Assistenzsystem mit den Merkmalen nach Anspruch 1 sowie ein entsprechendes Verfahren mit den Merkmalen nach Anspruch 10 bereit.

Das erfindungsgemäße Computerprogramm umfasst Programmcodemittel zum Durchführen aller erfindungsgemäßen Schritte, wenn das Programm auf einem Computer ausgeführt wird. Das Computerprogramm lässt sich somit in verschieden Systemen installieren und ausführen. Eine einfache Nachrüstung sowie schnelle Updates sind über entsprechende Datenleitung, beispielsweise auch über drahtlose Verbindungen möglich.

Das erfindungsgemäße Computerprogrammprodukt umfasst Programmcodemittel, die auf einem computerlesbaren Medium gespeichert sind, um das erfindungsgemäße Verfahren durchzuführen, wenn das Programmprodukt in einem Computer läuft. Somit lassen sich über das Computerprogrammprodukt die Programmcodemittel auf einfache Weise entsprechenden Abnehmern übertragen.

Durch die in den abhängigen Ansprüchen aufgeführten Maßnahmen sind vorteilhafte Weiterbildungen und Verbesserungen der in den unabhängigen Ansprüchen angegebenen Vorrichtungen, Verfahren, Computerprogrammen und Computerprogrammprodukten möglich.

In einer vorteilhaften Ausführungsform des Assistenzsystems ist vorgesehen, dass die Erkennungseinrichtung mindestens eine Erkennungseinheit umfasst, die anhand der gebietsspezifischen, verkehrsleitungsrelevanten Charakteristika das relevante Gebiet erkennt. Das Erkennen kann auf verschiedenste Weisen erfolgen, beispielsweise optisch, akustisch, haptisch, über eine manuelle Eingabe, über Signale und dergleichen. Gebietsspezifische, verkehrsleitende Charakteristika wie zum Beispiel Verkehrszeichen sind in unterschiedlichen Ländern unterschiedlich ausgebildet. Bei der Fahrerunterstützung werden zum Beispiel diese Verkehrszeichen erkannt und neben der eigentlichen Fahrinformation, wie hier die maximal zulässige Geschwindigkeit, werden aus der unterschiedlichen Darstellung des Verkehrszeichens gleichzeitig die gebietsspezifischen Informationen erkannt. So lässt sich beispielsweise an einem Verkehrszeichen neben einer maximal zulässigen Geschwindigkeit anhand der länderspezifischen Form des Verkehrszeichens auch erkennen, in welchem Land sich das Fahrzeug gerade befindet.

Eine weitere bevorzugte Ausführungsform des erfindungsgemäßen Assistenzsystems sieht vor, dass die Erkennungseinrichtung mindestens eine Erkennungseinheit umfasst, die anhand allgemeiner, gebührenpflichtiger oder frei empfänglicher Signale des entsprechenden Gebiets das relevante Gebiet erkennt. Mit allgemein, gebührenpflichtig oder frei empfänglichen Signalen sind sämtliche zu empfangende Signale gemeint, wie Verkehrszeichen, Radiofrequenzen oder Radiowellen, Fahrbahnmarkierungen und dergleichen. Auch umfasst sind GPS, Funk oder Handysignale, wobei hieraus nicht unbedingt verkehrsleitungsrelevanten Charakteristika erfasst werden können, jedoch gebietsspezifische Charakteristika, welche einen Aufschluss darüber geben, in welchem Gebiet sich das Fahrzeug gerade befindet. Entsprechend kann das empfängliche Signal zur Auswahl des erforderlichen Datensatzes verwendet werden. Nach Auswahl des relevanten Datensatzes kann das System die erkannten verkehrsleitungsrelevanten Charakteristika schneller erfassen und zuordnen, da die erfassten Signale mit einer geringeren Datenmenge verglichen und zugeordnet werden müssen.

Noch eine weitere vorteilhafte Ausführungsform der Erfindung sieht vor, dass die Erkennungseinheit mindestens einen Sensor umfasst, ausgewählt aus der Gruppe der Sensoren zur Erfassung von optischen Signalen, haptischen Signalen, akustischen Signalen, Radarsignalen, Satellitensignalen, Funksignalen, GPRS-Signalen, UMTS-Signalen, Radiosignalen und dergleichen. Auf diese Weise steht eine Vielzahl an Informationen zur Verfügung. Die Erkennungseinheit kann anhand der erfassten Signale länderspezifische Informationen und/oder verkehrsleitende Informationen gewinnen. So lassen sich beispielsweise auch Stauinformationen, Baustelleninformationen und dergleichen verarbeiten.

Noch eine weitere bevorzugte Ausführungsform sieht vor, dass die in den Datensätzen abgelegten Daten kraftfahrzeugtechnische und/oder verkehrstechnische Größen wie Geschwindigkeit, Abstand zu anderen Verkehrsteilnehmern, Traktion, Helligkeit, Verkehrswegbeschaffenheit, Verkehrswegmarkierung, Reifendruck, Verkehrslage, Witterungsbedingungen, Fahrbahnabstand und dergleichen umfassen. Aufgrund des verringerten Rechenleistungsbedarfs aufgrund der Unterteilung in länderspezifische Datensätze können mehr Funktionen in dem Assistenzsystem umfasst sein, ohne dass es zu Reaktionszeitverzögerungen kommt.

Ein weiteres bevorzugtes Ausführungsbeispiel der Erfindung sieht vor, dass die Unterstützung indirekt mittels Signalanzeigen erfolgt, wobei eine Signalanzeige optisch, akustisch, haptisch und/oder olfaktorisch erfolgen kann. Die Fahrzeugunterstützung erfolgt hier indirekt, indem einem Fahrer signalisiert wird, welche Schritte er einzuleiten hat. Die erforderlichen Schritte leitet der Fahrer aktiv selber ein, beispielsweise durch Betätigen eines entsprechenden Aktors.

Alternativ oder in Kombination dazu sieht eine andere bevorzugte Ausführungsform vor, dass die Unterstützung des Fahrers direkt mittels Einflussnahme auf das Fahrzeug erfolgt. Dies kann zum Beispiel wie beim Antiblockiersystem ABS erfolgen, indem der Fahrer nur die Aufgabe, nämlich das Bremsen, vorgibt und aufgrund der Steuerung die Aufgabe durch Unterstützung eines Assistenzsystems erfolgt. Insbesondere lässt sich dieses System damit auch dann verwenden, wenn der Fahrer zum Beispiel unaufmerksam ist oder zumindest für kurze Zeit eingeschlafen ist. Somit lässt sich wirkungsvoll eine Gefährdung des Verkehrs vermeiden.

Noch ein weiteres vorteilhaftes Ausführungsbeispiel des erfindungsgemäßen Assistenzsystems sieht vor, dass die Auswahl eines gebietsspezifischen Datensatzes durch eine Vorauswahl an möglichen Datensätzen beschleunigt ist, indem mögliche Gebietsübergänge gespeichert sind und entsprechende Datensätze mit einer Prioritätsstufe versehen sind. Auf diese Weise lässt sich der entsprechend anzuwendende, gebietsspezifische Datensatz aus einer gegenüber der gesamten Datenmenge kleineren Teilmenge anwenden. Beispielsweise können bei einem landgebundenen Grenzübergang zum Beispiel von den Niederlanden die Datensätze für Belgien und Deutschland vorausgewählt sein, da aufgrund der geografischen Anordnung der Niederlande kein anderer landgebundener Grenzübergang möglich ist.

Noch ein anderes bevorzugtes Ausführungsbeispiel sieht vor, dass das Assistenzsystem eine Mensch-Maschine-Schnittstelle aufweist um eine menschbetätigte Dateneingabe zu ermöglichen. Die Dateneingabe kann per Hand oder beispielsweise auch mittels Spracherkennung und dergleichen durchgeführt werden. Somit lässt sich das Assistenzsystem auch dann verwenden, wenn gerade kein Signal zu empfangen ist.

Nicht zuletzt sieht eine weitere Ausführungsform vor, dass die Daten des aktuellen Gebiets in einem Speicher abgelegt werden, sodass diese bei einem Neustart ausgelesen und ohne Neuerkennung verwendet werden können. Die entsprechenden Daten und/oder der entsprechende Datensatz des aktuellen Gebiets werden persistent oder nicht flüchtig in einem Datenspeicher abgelegt. Bei einem Neustart des Systems werden diese Daten aus dem Datenspeicher ausgelesen und stehen dem System somit zur Verfügung. Um eine schnelle Unterstützung zu gewährleisten, können diese aus dem Speicher abgerufenen Daten sofort verwendet werden, ohne dass eine Neuerkennung des Gebiets erfolgen muss.

Weitere Vorteile ergeben sich aus der nachfolgenden Beschreibung von Ausführungsbeispielen beziehungsweise aus den abhängigen Patentansprüchen.

### Kurze Beschreibung der Zeichnungen

Die Erfindung wird nachstehend anhand der in den Zeichnungen dargestellten Ausführungsformen näher erläutert.
- Figur 1: zeigt schematisch als Blockdiagramm ein erfindungsgemäßes Assistenzsystem.
- Figur 2: zeigt schematisch das von einer Erkennungseinrichtung gelieferte Bild eines Verkehrszeichens in verschiedenen Ländern.
- Figur 3: zeigt schematisch, wie die Umsetzung landgebundener Grenzübergänge in das Assistenzsystem eingebunden wird. Dabei zeigt Figur 3a eine übliche Europalandkarte und Figur 3b die daraus abgeleitete schematische Darstellung mit landgebundenen Grenzübergängen.

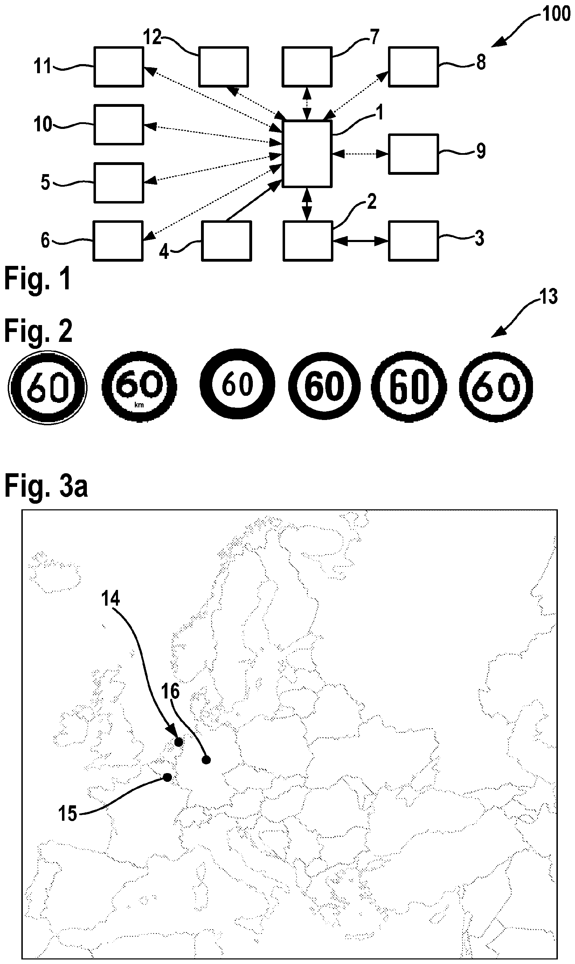

Figur 1 zeigt schematisch als Blockdiagramm ein Assistenzsystem 100 zur Fahrerunterstützung in Fahrzeugen. Fahrzeuge umfassen alle Kraftfahrzeuge wie Autos, Flugzeuge, Schiffe und dergleichen. Das Assistenzsystem 100 umfasst nach der Figur 1 ein zentrales Modul 1. Das Modul 1 ist mit mehreren Sensoren oder Erkennungseinheiten 5 bis 12 gekoppelt. Weiter ist das Modul 1 mit einer Datenbank 4 gekoppelt, in welcher länderspezifisch zugeordnete Datensätze mit den entsprechenden länderspezifischen Daten abgelegt sind. Weiter ist das Modul 1 mit einer Regelung 2 gekoppelt, welche die entsprechende Fahrerunterstützung regelt. Die Regelung 2 wiederum ist mit einer Mensch-Maschine-Schnittstelle 3 gekoppelt, über welche Information ausgegeben oder eingegeben werden können, sodass eine Kommunikation zwischen Mensch und Maschine realisiert ist. Das Assistenzsystem 100 funktioniert wie folgt: Über die Sensoren 5 bis 12 werden die benötigten Informationen wie gebietsspezifische, verkehrsleitungsrelevante Charakteristika umfassend Verkehrszeichen, Fahrbahnmarkierung, gesetzliche Verkehrsregeln und dergleichen erfasst. Die Sensoren 5 bis 12 können dabei unterschiedlich ausgebildet sein. Der Sensor 12 ist vorliegend als ein Telematiksystem/Notrufsystem wie eCall etc. ausgebildet. Hierüber lassen sich entsprechende landesspezifische Signale empfangen, sodass ein entsprechender Datensatz aus der Datenbank 4 ausgewählt werden kann. Der Sensor 11 repräsentiert zum Beispiel ein Autotelefon, welches Signale über GSM, GRPS, UMTS oder dergleichen erfasst. Auch diese durch den Sensor 11 empfangen Signale dienen in erster Linie zur Erkennung des relevanten Gebiets, in welchem sich das Fahrzeug gerade befindet. Es können jedoch auch verkehrsrelevante Daten über dieses Signal gesendet werden. Der Sensor 10 stellt ein Radio dar, welches entsprechende Radiosignale empfängt. Anhand der mit dem Radio empfangenen Signale lassen sich sowohl das aktuelle Gebiet, in welchem sich das Fahrzeug befindet, als auch verkehrsrelevante Daten wie Staus, Umfahrungsmöglichkeiten und dergleichen erfassen. Der Sensor 9 ist vorliegend ein Fahrzeugsensor, welcher die Fahrzeugdaten, wie Geschwindigkeit, Luftdruck, Reifendruck, Beschleunigung und dergleichen erfasst. Mit Hilfe der Daten von dem Fahrzeugsensor kann zum Beispiel ein Soll-Ist-Vergleich zwischen den tatsächlichen Fahrdaten und den zulässigen Fahrdaten erfolgen. Der Sensor 8 stellt vorliegend einen Radarsensor dar, der Radarsignale sendet und empfängt. Über diese Radarsignale lassen sich Informationen über weitere Verkehrsteilnehmer, die zu fahrende Strecke und dergleichen erfassen. Beispielsweise kann so ein Abstand zu anderen Verkehrsteilnehmern oder die Verkehrsdichte etc. erfasst werden. Der Sensor 7 ist vorliegend ein Videosensor, der optische Signale empfangen kann. Beispielsweise kann der Videosensor Verkehrszeichen und dergleichen erfassen. Die erfassten Signale lassen sich mit denen in den Datensätzen vergleichen und so kann eine Erkennung durchgeführt werden. Anhand der erkannten Signale ist dann die Fahrerunterstützung realisierbar. Der Sensor 6 repräsentiert in Figur 1 ein Navigationsgerät. Über den Sensor 6 lassen sich die Gebietsdaten erkennen. Der Sensor 5 stellt vorliegend einen Ortungssensor dar, der beispielsweise über GPS, von Galileo oder anderen Sendern Daten zur Ortung empfängt. Auf diese Weise lässt sich die Position des Fahrzeugs global erfassen.

Alle diese Sensoren dienen dazu, verkehrsrelevante und länderspezifische Daten zu erfassen. Die Daten werden an das zentrale Modul 1 weitergeleitet. Das Modul 1 wertet nun diese Signale aus und ordnet sie den in der Datenbank 4 geordneten länderspezifisch angeordneten Datensätzen zu. Aus der Datenbank 4 wird der entsprechende Länderdatensatz in das Modul 1 übertragen. Anhand der länderspezifischen Daten erfolgt die Regelung im Zusammenwirken zwischen Modul 1 und der Regelung 2. Die Regelung 2 kann dabei direkt in das Fahrzeug eingreifen oder indirekt über die Mensch-Maschine-Schnittstelle 3 dem Fahrer ein Signal zur Regelung übermitteln.

Figur 2 zeigt die verschiedenen länderspezifischen Varianten für ein Tempo 60-km/h-Schild 13 in verschiedenen Ländern, wie es zum Beispiel von dem Videosensor 7 nach Figur 1 erfasst wird. Anhand dieses Verkehrszeichens kann das Modul 1 zum einen ableiten, dass das Fahrzeug nicht schneller als mit 60 km/h bewegt werden darf. Zum anderen lässt sich anhand der unterschiedlichen Ausführungen des Verkehrsschildes eine Länderzuordnung treffen. Anhand der Länderzuordnung wird der entsprechende gebietsspezifische Datensatz ausgewählt und neben der Tempoinformation werden weitere länderspezifische Informationen in das Modul vorgeladen. Dabei kann bereits eine Vorauswahl von spezifischen Datensätzen getroffen worden sein.

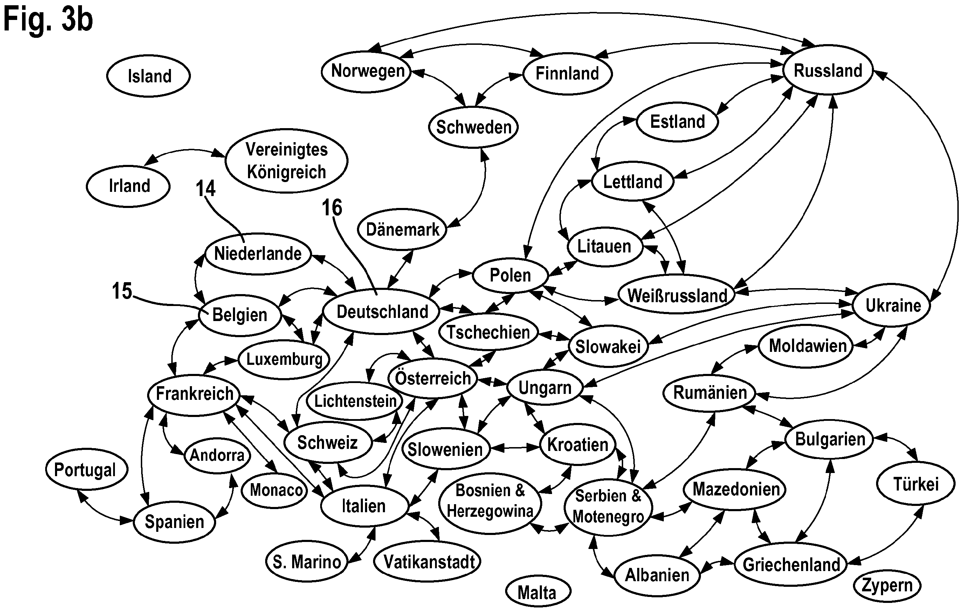

Figur 3a zeigt eine Europalandkarte und Figur 3b zeigt die aus Figur 3a abgeleitete schematische Darstellung mit landgebundenen Grenzübergängen. Wenn sich ein Fahrzeug zum Beispiel in den Niederlanden 14 befindet, ist anhand der Landkarte nach Figur 3a und der Umsetzung nach Figur 3b zu erkennen, dass es lediglich zwei benachbarte Länder gibt, die landgebunden mit dem Fahrzeug erreicht werden können, nämlich Belgien 15 und Deutschland 16. Entsprechend sind die Datensätze für Belgien 15 und Deutschland 16 mit einer höheren Prioritätsstufe versehen, sodass beim Verlassen der Niederlande 14 das neu erreichte Gebiet und die entsprechenden Daten nicht aus den Datensätzen für alle europäischen Staaten sondern nur aus einem der beiden Datensätze für Belgien 15 und Deutschland 16 ausgewählt werden muss. Diese Vorauswahl mit entsprechender Prioritätsstufe ermöglicht auf einfache Weise, die Geschwindigkeit bei der Erkennung zu erhöhen, da nur erfasste Daten mit Daten aus zwei Datensätzen verglichen werden müssen.

Zentraler Punkt der Erfindung ist also die Adaption von Fahrerassistenzsystem und dessen Funktionen an länderspezifischer Situation. Eine länderspezifische Situation könnte beispielsweise das unterschiedliche Design von Verkehrszeichen oder die unterschiedliche Ausführung von Straßenmarkierungen in unterschiedlichen Ländern sein. Das System ermittelt dabei die Landessituation aus angeschlossenen Sensoren 5 bis 12 und/oder bekommt die aktuell gültige Landessituation explizit - durch eine Fahrereingabe über eine Mensch-Maschine-Schnittstelle 3 vorgegeben. Die unterschiedlichen Länder besitzen aber unterschiedliche Eigenschaften, die in einer Länderdefinition, die in einer Datenbank abgelegt ist, gespeichert ist. Der Inhalt der Datenbank 4 kann beispielsweise verschiedene Verkehrszeichendesigns, verschiedene Fahrbahnliniendesigns, Autokennzeichen, Radiostation, Netznamen von Mobilfunkanbietern, zulässige Fahrweisen (beispielsweise Rechts-/Linksverkehr) usw. umfassen, die in den jeweiligen Ländern gültig sind. Die Ermittlung der aktuellen Ländersituation bzw. des aktuell befahrenen Landes wird dabei aus einem oder mehreren der folgenden Sensoren 5 bis 12 durchgeführt: Mit dem Ortungssender 5 wird die aktuelle Position des Fahrzeuges ermittelt, beispielsweise über GPS, Galileo oder vergleichbare Information. Zusammen mit abgelegten Landespositionen inklusive der Grenzverläufe wird daraufhin die Landesinformation erzeugt. Mittels des Navigationsgerätes 6, welches zusammen mit dem Ortungssensor 5 und zum Beispiel einer digital hinterlegten Karte das aktuelle Land ermitteln kann, kann die Landessituation bestimmt werden. Ein Videosensor 7, der aus erkannten Objekten und/oder Situation und/oder Fahrweisen und/oder sonstiger spezifischer länderspezifischer Charakteristika Rückschluss auf das aktuell befahrene Land erzeugen kann, dient ebenfalls zur Ländersituationsbestimmung. Ein Radarsensor 8, der aus erkannten Objekten und/oder Situationen und/oder Fahrweisen Rückschlüsse auf das aktuell befahrene Land erzeugen kann, trägt ebenfalls zur Ermittlung der Ländersituation bei. Weitere Fahrzeugsensoren können ebenfalls die Ländersituationserkennung unterstützen, wobei diese aus erkannten Objekten und/oder Situation und/oder Fahrweisen Rückschlüsse auf das aktuell befahrene Land erzeugen können. Ein Radioempfänger 10 kann aus dem empfangenen Radioprogramm Rückschlüsse auf das aktuell befahrene Land erzeugen. Ein Autotelefon 11 kann aus dem empfangenen Mobilfunknetzen Rückschlüsse auf das aktuell befahrene Land erzeugen. Ein Telematiksystem 12 kann aus empfangenen Diensten (beispielsweise eCall) Rückschlüsse auf das aktuell befahrene Land erzeugen. Zur Ermittlung des aktuellen Landes sind nicht unbedingt spezielle Sensoriken erforderlich. Am Beispiel der in Figur 2 näher beschriebenen Verkehrszeichenerkennung ist beispielsweise das Ermitteln der Landessituation bereits aus dem Videosensor 7 möglich. Dies gelingt, da die verschienenen Länder verschiedene Verkehrszeichen-Layouts/-Designs definieren, wie beispielsweise in Figur 2 angegeben. Diese Unterschiede können von dem Videosensor 7 wahrgenommen werden, wodurch dann das Modul 1 die entsprechende Landessituation berechnen kann. Die Ermittlung der Landessituation, die bereits videobasiert gelingt, kann natürlich durch weitere Sensoren 5 bis 12 vorteilhaft unterstützt oder ergänzt werden. Somit sind also auch Kombinationen aus verschiedenen Sensoren 5 bis 12 möglich.

Bei der Ermittlung der Landessituation kann dabei auch implizites Wissen über die möglichen Landesübergänge genutzt werden. Am Beispiel der europäischen Länder und deren Lage zueinander (vgl. beispielsweise Figur 3) ergeben sich nur eine endliche Anzahl von möglichen Übergängen von Land zu Land. In Figur 3b sind beispielsweise einige mögliche Landeswechsel für Europa angegeben, sollte das Fahrzeug sich auf dem Landweg bewegen.

Ist einmal die Länderinformation vorhanden, kann diese zu einer Effizienzverbesserung der Messprogramme der Sensorik durch Einschränkung auf wahrscheinliche Fälle bzw. weniger Rechenkomplexität bzw. Erhöhung der Zuverlässigkeit der Umfelderfassung vorteilhaft genutzt werden.

Das Assistenzsystem 100 ist dadurch zuverlässiger, einfacher und kostengünstiger umzusetzen. Über die Mensch-Maschine-Schnittstelle 3 kann dem Fahrer angezeigt werden, welche Höchstgeschwindigkeit in dem jeweiligen Land zulässig ist, auch in Abhängigkeit von verschiedenen Straßenformen, wie Autobahn, Landstraßen, Bundesstraßen und dergleichen, zudem lassen sich Warnschwellen für die unterschiedlichen Länder adaptieren. Weiterhin lassen sich zulässige Fahrmanöver anzeigen, wie beispielsweise Abbiegen, Rechtsüberholen und dergleichen. Im jeweiligen Land lassen sich über die Mensch-Maschine-Schnittstelle 3 auch die zulässigen Tonnagen und damit verbundene Höchstgeschwindigkeiten anzeigen. Entsprechend kann auch ein automatisches An- und Abschalten des Fahr- und/oder Fernlichts realisiert werden, wenn z. B. auch tagsüber ein Lichtgebot herrscht, wie im Falle Dänemark.

Nicht zuletzt lässt sich die Adaption der Fahranweisung an bestimmte landesspezifische Bauformen von Straßen hinterlegen und anzeigen.

Das Verhalten von Fahrerassistenzsystem 100 kann damit automatisch adaptiert werden, wie beispielsweise das Setzen der Tempomat- und/oder der ACC-Sollgeschwindigkeit (ACC = Adaptive Cruise Control), die Licht- und/oder Blinkerbedienung, die Radiobedienung (Stationssuche, ähnliche Senderprofile in verschiedenen Ländern) und die Telefonbedienung (auch Auswahl von günstigen Mobilfunkprovidern).

Die Ländersituation kann je nach Eindeutigkeit der Informationsquellen 5 bis 12 ein spezielles eindeutiges Land ergeben, mehrere Länder zur Auswahl stellen, eine Länderregion (beispielsweise westeuropäische Länder, osteuropäische Länder) und dergleichen oder eine nicht definierte Situation ergeben. Die Angabe der Ländersituation kann optional eine Zuverlässigkeit der aktuell ermittelten Ländersituation enthalten.

Die Länderdefinition kann in einzelnen Designs und/oder Aussehen von Objekten enthalten wie: Verkehrszeichen, Fahrbahnlinien, Beschilderungsweisen, Ortsschilder, Ortsnamen, Namen von Länderübergängen, Grenzstationen, Automarken, deren Design und Häufigkeit in Ländern, spezielle Personenmerkmale (Menschen mit Turban in orientalischen Ländern) und dergleichen.

Weiterhin können Metainformationen zu den Ländern angegeben werden, wie Grenzinformationen des Landes, mögliche Grenzübergänge zwischen den Ländern, Sprachdefinitionen, Namenskonventionen und erlaubte Fahrzeuggeschwindigkeiten.

Weiterhin können die Fahrweise und die Fahrvorschrift vorgegeben werden, wie Links- oder Rechtsverkehr, erlaubte Abbiegemanöver und dergleichen.

Darüber hinaus lassen sich Radiostationen adaptieren, wie verfügbare Sender pro Land, RDS Stationscodes pro Land, Frequenzen von Radiosendern, geographische Positionen von Radiosendern, Sprachinformation von Radiosendern, Sendeleistung von Radiosendern.

Auch lassen sich die Mobilfunkanbieter adaptiv einbinden, wie verfügbare Sender pro Land, GSM Providercodes pro Land, Frequenzen von GSM-Sendern geographische Positionen von Mobilfunksendern, Sprachinformationen von Mobilfunksendern, Sendeleistung von Mobilfunksendern, Zellencodes von Mobilfunksendern und dergleichen.

Die entsprechend oben aufgeführten Ländereigenschaften lassen sich optional durch geeignete Verfahren ergänzen, verändern oder erweitern beispielsweise durch ein Softwareupdate während einer Fahrzeuginspektion oder anderer Downloads. Sie können von den jeweiligen Sensoriken entsprechend der Erkennung eines Landes genutzt werden.

Der Ortungssensor 5 kann die gemessene Geoposition mit Landespositionen vergleichen und eine Landesbestimmung durchführen.

Das Navigationsgerät 6 kann einen Vergleich der aktuellen Ortungsposition mit einer digitalen Karte durchführen und das Land entsprechend bestimmen.

Der Videosensor 7 kann das Land aus verschiedenen, beispielhaften Objekteigenschaften und/oder Situationen bestimmen wie das Aussehen und/oder die Häufigkeit von Verkehrszeichnung, das Aussehen und/oder die Größe und/oder die Abstände und/oder die Häufigkeit von Straßenmarkierungen und Leitpfosten, das Aussehen und/oder die Häufigkeit von Fahrzeugen und/oder Fahrzeugtypen und/oder Personen, das Aussehen und/oder die Häufigkeit von Fahrzeugkennzeichen und gefahrene Fahrgeschwindigkeiten können zur Landesbestimmung verwendet werden.

Der Radarsensor 8 kann das Land aus verschiedenen, beispielhaften Objekteigenschaften und/oder Situationen bestimmen: Über gefahrene Fahrzeugtrajektorien und gefahrene Fahrzeuggeschwindigkeiten kann die Landbestimmung erfolgen.

Weitere Fahrzeugsensoren 9 wie Fahrdynamiksensoren, die u. a. für ein ESP genutzt werden, können das Land aus verschiedenen Objekteigenschaften und/oder Situationen bestimmen: gefahrene Fahrzeugtrajektorien, gefahrene Fahrzeuggeschwindigkeiten und dergleichen. Eine Fährfahrt kann aus der Fahrzeugbewegung im Stillstand erkannt werden. Die Wank- und Gierbewegungen des Schiffes lassen sich mit häufig vorhandenen Beschleunigungssensoren bestimmen.

Das Radiogerät 10, welches mit RDS Empfänger ausgerüstet ist, kann ebenfalls zur Ermittlung der Landessituation genutzt werden: Eine im System 100 vorhandene Liste mit RDS Empfangs-Code beispielsweise NDR2 liefert als möglichen Landes-Code beispielsweise Deutschland. In Grenzgebieten zwischen verschiedenen Ländern werden unterschiedliche Landeszuordnungen berechnet. Hier kann die Signalstärke oder die Häufigkeit von Signalen ggf. zur Unterscheidung dienen.

Ein Mobilfunktelefon bucht sich in ein Netz des jeweiligen Netzbetreibers ein. Sind die möglichen Netzbetreiber dem System und deren Zuordnung zu Ländern bekannt, so kann das Land bestimmt werden, in dem sich das Fahrzeug bzw. das Mobiltelefon befindet. Diese Option kann vor allem für mobile Assistenzsysteme 100 vorteilhaft sein, bei denen sich das Assistenzsystem 100 in einem Mobiltelefon befindet.

In dem Telematiksystem 12 liegen ebenfalls oft Informationen für eine Ortung (GPS) und/oder Informationen eines Navigationssystems 6 und/oder eines Mobiltelefons vor. Beispielsweise haben Notrufdienste, wie das in 2010 in Europa an den Start gehende eCall System, Informationen über ein Ortungsmodul und Zugriff auf Mobilfunknetze (über die der Notruf abgesetzt würde). Da diese Systeme in Zukunft eine hohe Marktdurchdringung aufweisen werden, kann deren Information auch vorteilhaft in Assistenzsystemen 100 genutzt werden.

Mehrere Sensorinformationen können auch vorteilhaft miteinander in Kombination und/oder Fusion verwendet werden, um die Zuverlässigkeit der Landesermittlung zu erhöhen. Jede Sensorinformation kann eine Zuverlässigkeit der Landesaussage bestimmen und aus allen Einzelzuverlässigkeiten kann eine Gesamtzuverlässigkeit berechnet werden.

Kann ein Land nicht eindeutig bestimmt werden, dann besteht die Möglichkeit, dass eine Länderliste berechnet wird, mit einer Reihenfolge an Ländern, deren Auswahl am wahrscheinlichsten anhand der Informationen ist.

Zur Berechnung der Landessituation können auch mögliche Grenzwechsel auf dem Landweg oder auf dem Seeweg berücksichtigt werden. Die Unterscheidung zwischen Land und Seeweg kann u. a. durch die Fahrzeugdynamiksensoren 9 realisiert werden. Auf dem Seeweg liefern durch die Schiffsbewegung die Beschleunigungssensoren des Fahrzeugachsen Signale, ohne dass die Bewegungssensoren eine Bewegung feststellen.

## Patentansprüche

1. Assistenzsystem (100) zur Fahrerunterstützung in Fahrzeugen,
das einen Datenspeicher (4) umfasst, in dem spezifische Datensätze mit entsprechenden Daten unterschiedlicher Länder, Regionen oder anderen Gebieten (14, 15, 16) abgelegt sind, und das dazu eingerichtet ist,
gebietspezifische, verkehrsleitungsrelevante Charakteristika wie Verkehrszeichen (13), Fahrbahnmarkierungen, gesetzliche Verkehrsregeln mit einer Erkennungseinrichtung zu erkennen und den entsprechenden spezifischen Datensatz auszuwählen, indem erfasste Sgnale mit denen in den spezifischen Datensätzen verglichen werden, und zugeordnete Daten aus dem Datenspeicher (4) zur Fahrerinformation und/oder Fahrzeugbeeinflussung zu verwenden, wobei die Erkennungseinrichtung das Überfahren einer Landesgrenze und/oder das Erreichen des Landes erkennt und im erkannten Land der korrespondierende Datensatz mit den Daten zur Fahrerunterstützung verwendet wird,
**dadurch gekennzeichnet, dass**
die Erkennung des Landes und die Auswahl des landesspezifischen Datensatzes durch eine Vorauswahl an möglichen Daten beschleunigt ist, indem mögliche Landesübergänge gespeichert sind und entsprechende Datensätze mit einer Prioritätsstufe versehen sind.

2. Assistenzsystem (100) nach Anspruch 1, **dadurch gekennzeichnet, dass** die Erkennungseinrichtung mindestens eine Erkennungseinheit (5 bis 12) umfasst, die anhand der gebietsspezifischen verkehrs leitungsrelevanten Charakteristika das relevante Gebiet erkennt.

3. Assistenzsystem (100) nach Anspruch 1 oder 2, **dadurch gekennzeichnet, dass** die Erkennungseinrichtung mindestens eine Erkennungseinheit umfasst, die anhand empfänglicher Signale des entsprechenden Gebiets das relevante Gebiet erkennt.

4. Assistenzsystem (100) nach einem der Ansprüche 1 bis 3, **dadurch gekennzeichnet, dass** die Erkennungseinheiten (5 bis 12) mindestens einen Sensor umfasst, ausgewählt aus der Gruppe der Sensoren zur Erfassung von optischen Signalen, haptischen Signalen, akustischen Signalen, Radarsignalen, Satellitensignalen, olfaktorischen Signalen, Funksignalen, GRPS-Signalen, UMTS-Signalen, Radiosignalen.

5. Assistenzsystem (100) nach einem der Ansprüche 1 bis 4, **dadurch gekennzeichnet, dass** die in den Datensätzen abgelegten Daten kraftfahrzeugtechnische und/oder verkehrstechnische Größen wie Geschwindigkeiten von oder Abstände zu anderen Verkehrsteilnehmern, Traktion, Helligkeit, Verkehrswegbeschaffenheit, Verkehrswegmarkierungen, Reifendruck, Verkehrslage, Witterungsbedingungen umfassen.

6. Assistenzsystem (100) nach einem der Ansprüche 1 bis 5, **dadurch gekennzeichnet, dass** die Unterstützung indirekt mittels einer Signalanzeige erfolgt, wobei eine Signalanzeige optisch, akustisch, haptisch und/oder olfaktorisch erfolgen kann.

7. Assistenzsystem (100) nach einem der Ansprüche 1 bis 6, **dadurch gekennzeichnet, dass** die Unterstützung direkt mittels Einflussnahme auf das Fahrzeug erfolgt.

8. Assistenzsystem (100) nach einem der Ansprüche 1 bis 7, **dadurch gekennzeichnet, dass** das Assistenzsystem (100) eine Mensch-Maschine-Schnittstelle (3) aufweist, um eine menschbetätigte Dateneingabe und/oder Ausgabe zu ermöglichen.

9. Assistenzsystem (100) nach einem der Ansprüche 1 bis 8, **dadurch gekennzeichnet, dass** die Daten des aktuellen Gebiets in einem Speicher abgelegt werden, sodass diese bei einem Neustart ausgelesen und ohne Neuerkennung verwendet werden können.

10. Verfahren zur Fahrerunterstützung in Fahrzeugen mittels eines Assistenzsystems, das einen Datenspeicher (4) umfasst, in dem spezifische Datensätze mit entsprechenden Daten unterschiedlicher Länder, Regionen oder anderen Gebieten (14, 15, 16) abgelegt sind, umfassend die Schritte:
Erkennen von gebietspezifischen, verkehrsleitungsrelevanten Charakteristika wie Verkehrszeichen (13), Fahrbahnmarkierungen, gesetzliche Verkehrsregeln mit einer Erkennungseinrichtung, indem erfasste Sgnale mit denen in den spezifischen Datensätzen verglichen werden, Auswählen des entsprechenden spezifischen Datensatzes und
Verwenden zugeordneter Daten aus dem dem Datenspeicher (4) zur Fahrerinformation und/oder Fahrzeugbeeinflussung,
Erkennen von einem Überfahren einer Landesgrenze und/oder einem Erreichen des Landes durch die Erkennungseinrichtung und Verwenden des korrespondierenden, landesspezifischen Datensatzes mit den Daten zur Fahrerunterstützung in dem erkannten Land,
**dadurch gekennzeichnet, dass**
die Erkennung des Landes und die Auswahl des landesspezifischen Datensatzes durch eine Vorauswahl an möglichen Daten beschleunigt ist, indem mögliche Landesübergänge gespeichert sind und entsprechende Datensätze mit einer Prioritätsstufe versehen sind.

11. Computerprogramm umfassend Programmcodemittel zum Durchführen aller Schritte gemäß des Anspruchs ¹⁰, wenn das Programm auf einem Computer ausgeführt wird.

12. Computerprogrammprodukt umfassend Programmcodemittel, die auf einem computerlesbaren Medium gespeichert sind, um das Verfahren nach Anspruch 10 durchzuführen, wenn das Programmprodukt in einem Computer läuft.

## Claims

1. Assistance system (100) for driver assistance in vehicles,
which comprises a data memory (4) storing specific data records with applicable data for different countries, regions or other areas (14, 15, 16) and which is configured
to detect area-specific, traffic-management-relevant characteristics such as road signs (13), roadway markings and legal traffic regulations using a detection device and to select the applicable specific data record by virtue of captured signals being compared with those in the specific data records,
and to use associated data from the data memory (4) for driver information and/or vehicle influencing, wherein the detection device detects when a national border is crossed and/or the country is reached, and in the detected country the corresponding data record with the data is used for driver assistance, **characterized in that**
detection of the country and selection of the country-specific data record are speeded up by means of a preselection of possible data by virtue of possible national border crossing points being stored and applicable data records being provided with a priority level.

2. Assistance system (100) according to Claim 1, **characterized in that** the detection device comprises at least one detection unit (5 to 12) that takes the area-specific traffic-management-relevant characteristics as a basis for detecting the relevant area.

3. Assistance system (100) according to Claim 1 or 2, **characterized in that** the detection device comprises at least one detection unit that takes susceptible signals of the applicable area as a basis for detecting the relevant area.

4. Assistance system (100) according to one of Claims 1 to 3, **characterized in that** the detection units (5 to 12) comprise at least one sensor, selected from the group of sensors for capturing visible signals, haptic signals, audible signals, radar signals, satellite signals, olfactory signals, radio signals, GRPS signals, UMTS signals and radio signals.

5. Assistance system (100) according to one of Claims 1 to 4, **characterized in that** the data stored in the data records comprise motor-vehicle and/or traffic variables such as speeds of or distances from other road users, traction, brightness, traffic route condition, traffic route markings, tyre pressure, traffic and weather conditions.

6. Assistance system (100) according to one of Claims 1 to 5, **characterized in that** the assistance is provided indirectly by means of a signal indication, a signal indication being able to be provided visibly, audibly, haptically and/or olfactorily.

7. Assistance system (100) according to one of Claims 1 to 6, **characterized in that** the assistance is provided directly by means of influence on the vehicle.

8. Assistance system (100) according to one of Claims 1 to 7,
**characterized in that** the assistance system (100) has a human-machine interface (3) in order to allow human data input and/or output.

9. Assistance system (100) according to one of Claims 1 to 8,
**characterized in that** the data of the current area are stored in a memory, so that they can be read on a restart and can be used without redetection.

10. Method for driver assistance in vehicles by means of an assistance system, which comprises a data memory (4) storing specific data records with applicable data for different countries, regions or other areas (14, 15, 16), comprising the steps of: detecting area-specific, traffic-management-relevant characteristics such as road signs (13), roadway markings and legal traffic regulations using a detection device
by virtue of captured signals being compared with those in the specific data records,
selecting the applicable specific data record and using associated data from the the data memory (4) for driver information and/or vehicle influencing, detecting when a national border is crossed and/or the country is reached by means of the detection device and using the corresponding, country-specific data record with the data for driver assistance in the detected country,
**characterized in that**
detection of the country and selection of the country-specific data record are speeded up by means of a preselection of possible data by virtue of possible national border crossing points being stored and applicable data records being provided with a priority level.

11. Computer program comprising program code means for performing all the steps according to Claim 10 when the program is executed on a computer.

12. Computer program product comprising program code means stored on a computer-readable medium in order to perform the method according to Claim 10 when the program product runs on a computer.

## Revendications

1. Système d'assistance (100) destiné à apporter une aide à la conduite dans des véhicules,
comprenant une mémoire de données (4) dans laquelle sont stockés des ensembles de données spécifiques en association avec des données correspondantes de différents pays, de différentes régions ou d'autres zones (14, 15, 16), et qui est conçu pour
reconnaître des caractéristiques spécifiques d'une zone et pertinentes pour la gestion du trafic, telles que des panneaux de signalisation (13), des marquages routiers, des règlementations légales de circulation, au moyen d'un dispositif de reconnaissance et pour sélectionner l'ensemble de données spécifique correspondant, en comparant des signaux détectés à ceux contenus dans les ensembles de données spécifiques
et en utilisant des données associées provenant de la mémoire de données (4) à des fins d'information du conducteur et/ou pour exercer une influence sur le véhicule, dans lequel le dispositif de reconnaissance reconnaît le franchissement d'une frontière entre pays et/ou l'arrivée dans un pays, et l'ensemble de données correspondant est utilisé dans le pays reconnu dudit ensemble de données en association avec les données à des fins d'aide au conducteur,
**caractérisé en ce que** la reconnaissance du pays et la sélection de l'ensemble de données spécifique du pays sont accélérées par une présélection de données possibles en stockant des transitions possibles entre pays et en conférant un niveau de priorité à des ensembles de données correspondants.

2. Système d'assistance (100) selon la revendication 1, **caractérisé en ce que** le dispositif de reconnaissance comprend au moins une unité de reconnaissance (5 à 12) qui reconnaît la zone pertinente sur la base des caractéristiques spécifiques de la zone et pertinentes pour la gestion du trafic.

3. Système d'assistance (100) selon la revendication 1 ou 2, **caractérisé en ce que** le dispositif de reconnaissance comprend au moins une unité de reconnaissance qui reconnaît la zone correspondante sur la base de signaux de réception de la zone correspondante.

4. Système d'assistance (100) selon l'une des revendications 1 à 3, **caractérisé en ce que** les unités de reconnaissance (5 à 12) comprennent au moins un capteur choisi dans le groupe de capteurs destinés à détecter des signaux optiques, des signaux haptiques, des signaux acoustiques, des signaux radar, des signaux satellites, des signaux olfactifs, des signaux de diffusion, des signaux GRPS, des signaux UMTS, et des signaux radio.

5. Système d'assistance (100) selon l'une des revendications 1 à 4, **caractérisé en ce que** les données stockées dans les ensembles de données contiennent des grandeurs relatives aux véhicules à moteur et/ou relatives à la circulation telles que des vitesses d'autres usagers de la route ou des distance par rapport à ceux-ci, la traction, la luminosité, l'état des voies de circulation, des marquage des voies de circulation, la pression des pneus, l'état de la circulation, les conditions climatiques.

6. Système d'assistance (100) selon l'une des revendications 1 à 5, **caractérisé en ce que** l'aide est apportée indirectement au moyen d'une présentation de signal, dans lequel la présentation de signal peut être effectuée de manière optique, acoustique, haptique et/ou olfactive.

7. Système d'assistance (100) selon l'une des revendications 1 à 6, **caractérisé en ce que** l'aide est apportée directement au moyen d'une influence exercée sur le véhicule.

8. Système d'assistance (100) selon l'une des revendications 1 à 7, **caractérisé en ce que** le système d'assistance (100) comprend une interface homme-machine (3) destinée à permettre la fourniture en entrée et/ou en sortie de données par une personne.

9. Système d'assistance (100) selon l'une des revendications 1 à 8, **caractérisé en ce que** les données de la zone actuelle sont stockées dans une mémoire de manière à ce qu'elles puissent être lues lors d'un redémarrage et utilisées sans nouvelle reconnaissance.

10. Procédé d'aide à la conduite dans des véhicules au moyen d'un système d'assistance comprenant une mémoire de données (4) dans laquelle sont stockés des ensembles de données spécifiques en association avec des données correspondantes de différents pays, de différentes régions ou d'autres zones (14, 15, 16), comprenant les étapes consistant à :
reconnaître des caractéristiques spécifiques d'une zone et pertinentes pour la gestion du trafic, telles que des panneaux de signalisation (13), des marquages routiers, des règlementations légales de circulation, au moyen d'un dispositif de reconnaissance, en comparant des signaux détectés avec ceux contenus dans les ensembles de données spécifiques,
sélectionner l'ensemble de données spécifique correspondant et
utiliser des données associées provenant de la la mémoire de données (4) à des fins d'information du conducteur et/ou pour exercer une 'influence sur le véhicule,
reconnaître le franchissement d'une frontière entre pays et/ou l'arrivée dans un pays au moyen du dispositif de détection, et utiliser l'ensemble de données correspondant spécifique du pays en association avec les données à des fins d'aide à la conduite dans le pays reconnu,
**caractérisé en ce que**
la reconnaissance du pays et la sélection de l'ensemble de données spécifique du pays sont accélérées par une présélection de données possibles
en stockant des transitions possibles entre pays et en conférant un niveau de priorité à des ensembles de données correspondants.

11. Programme d'ordinateur comprenant des moyens à codes de programmes destinés à mettre en oeuvre toutes les étapes selon la revendication 10 lorsque le programme est exécuté sur un ordinateur.

12. Produit de programme d'ordinateur comprenant des moyens à codes de programmes stockés sur un support lisible par ordinateur pour mettre en oeuvre le procédé selon la revendication 10 lorsque le produit de programme est exécuté sur un ordinateur.
